# EUROPÄISCHE PATENTANMELDUNG

(11) **EP 3 739 663 A1**
(43) Veröffentlichungstag der Anmeldung: **18.11.2020**
(21) Anmeldenummer: 19174310.3
(22) Anmeldetag: 14.05.2019
(51) Int. Cl.: H01M 2/12, H01M 2/20, H01M 2/34, H01M 10/04

(54) **BATTERIEVORRICHTUNG UND BEARBEITUNGSSYSTEM**

(71) Anmelder: Andreas Stihl AG & Co. KG, 71336 Waiblingen (DE)
(72) Erfinder: KOLB, Joachim, 71638 Ludwigsburg (DE); WILKA, Marcel, 73560 Böbingen (DE)
(74) Vertreter: Patentanwälte Ruff, Wilhelm, Beier, Dauster & Partner mbB

(57) **Zusammenfassung**

Die Erfindung bezieht sich auf eine Batterievorrichtung (1) zur Versorgung eines elektrisch angetriebenen Bearbeitungsgeräts (101) mit elektrischer Antriebsleistung (AL), wobei die Batterievorrichtung (1) aufweist:
- mindestens eine Batteriezelle (2), wobei die Batteriezelle (2) ein Terminal (3) mit einem Sicherheitsventil (4) aufweist, wobei das Sicherheitsventil (4) mit einem Bewegungsteil (4B) einer Oberfläche (3O) des Terminals (3) von einer Schließstellung (CS) zur Bewegung in Richtung nach außen (z) in eine Offenstellung (OS) ausgebildet ist, und
- mindestens einen Zellkontaktierer (5', 5"), wobei der Zellkontaktierer (5', 5") in der Schließstellung (CS) des Bewegungsteils (4B) mit dem Terminal (3) einen elektrischen Kontakt mittels mindestens einer stoffschlüssigen Verbindung (SV) aufweist und die Bewegung des Bewegungsteils (4B) zulässt.

## Beschreibung

### ANWENDUNGSGEBIET UND STAND DER TECHNIK

Die Erfindung bezieht sich auf eine Batterievorrichtung zur Versorgung eines elektrisch angetriebenen Bearbeitungsgeräts mit elektrischer Antriebsleistung und auf ein Bearbeitungssystem aufweisend eine solche Batterievorrichtung und ein elektrisch angetriebenes Bearbeitungsgerät.

### AUFGABE UND LÖSUNG

Der Erfindung liegt als Aufgabe die Bereitstellung einer Batterievorrichtung zur Versorgung eines elektrisch angetriebenen Bearbeitungsgeräts mit elektrischer Antriebsleistung, wobei die Batterievorrichtung, verbesserte Eigenschaften aufweist, insbesondere sicherer ist, und eines Bearbeitungssystems aufweisend eine solche Batterievorrichtung und ein elektrisch angetriebenes Bearbeitungsgerät zugrunde.

Die Erfindung löst die Aufgabe durch die Bereitstellung einer Batterievorrichtung mit den Merkmalen des Anspruchs 1 und eines Bearbeitungssystems mit den Merkmalen des Anspruchs 14. Vorteilhafte Weiterbildungen und/oder Ausgestaltungen der Erfindung sind in den abhängigen Ansprüchen beschrieben.

Die erfindungsgemäße Batterievorrichtung ist zur, insbesondere automatischen, Versorgung eines elektrisch angetriebenen Bearbeitungsgeräts, insbesondere Garten-, Forst- und/oder Baubearbeitungsgeräts, mit elektrischer Antriebsleistung ausgebildet bzw. konfiguriert. Die Batterievorrichtung weist mindestens eine Batteriezelle und mindestens einen Zellkontaktierer auf. Die Batteriezelle weist ein Terminal mit einem Sicherheitsventil auf. Das Sicherheitsventil ist mit einem Bewegungsteil einer Oberfläche des Terminals von einer Schließstellung zur Bewegung bzw. zum Öffnen in Richtung nach außen in eine Offenstellung ausgebildet bzw. konfiguriert. Der Zellkontaktierer weist in der Schließstellung des Bewegungsteils mit dem Terminal, insbesondere direkt, einen elektrischen Kontakt bzw. eine elektrische Verbindung mittels mindestens einer stoffschlüssigen Verbindung auf. Des Weiteren lässt der Zellkontaktierer die Bewegung des Bewegungsteils, insbesondere von der Schließstellung in die Offenstellung, zu.

Das Sicherheitsventil, insbesondere mit dem Bewegungsteil in der Offenstellung, ermöglicht ein Ablassen von Abgas von innen bzw. innerhalb der Batteriezelle nach außen bzw. außerhalb der Batteriezelle, insbesondere wenn ein Druck von Abgas erzeugt durch eine elektrochemische Reaktion stattfindend in bzw. innerhalb der Batteriezelle einen vorbestimmten Grenzdruck überschreitet. Dies kann ermöglichen, einen Schaden klein zu halten, insbesondere auch wenn die Batteriezelle einen relativ hohen Energieinhalt aufweisen kann.

Der Zellkontaktierer ermöglicht das Öffnen des Sicherheitsventils, insbesondere des Bewegungsteils. In anderen Worten: der Zellkontaktierer kann oder braucht das Sicherheitsventil nicht zuhalten.

Die stoffschlüssige Verbindung ermöglicht einen sicheren elektrischen Kontakt, insbesondere bei Korrosion des Terminals und/oder des Zellkontaktierers, z.B. im Unterschied zu einem elektrischen Kontakt mittels einer kraftschlüssigen Verbindung.

Insbesondere kann die mindestens eine Batteriezelle zur Versorgung des Bearbeitungsgeräts mit Antriebsleistung ausgebildet sein. Zusätzlich oder alternativ kann die Batteriezelle entweder eine, insbesondere nicht wiederaufladbare, Primärzelle oder eine, insbesondere wiederaufladbare, Sekundärzelle bzw. Akkumulatorzelle sein. Insbesondere kann die Batteriezelle eine Lithium-Ionen-Akkumulatorzelle sein. Weiter zusätzlich oder alternativ kann das Terminal als Pol oder Elektrode bezeichnet werden. Weiter zusätzlich oder alternativ kann die Batteriezelle ein weiteres Terminal, insbesondere mit einem weiteren Sicherheitsventil, aufweisen. Insbesondere kann die Batterievorrichtung einen weiteren Zellkontaktierer aufweisen, wobei der weitere Zellkontaktierer mit dem weiteren Terminal einen elektrischen Kontakt aufweisen kann.

Die Oberfläche des Terminals kann eine Außenfläche sein. Zusätzlich oder alternativ können die Schließstellung und die Offenstellung verschieden sein. Insbesondere kann das Sicherheitsventil mit dem Bewegungsteil in der Schließstellung zum Verhindern eines Ablassens von Abgas von innen nach außen ausgebildet sein. Zusätzlich oder alternativ kann das Sicherheitsventil mit dem Bewegungsteil in der Offenstellung zum Zulassen eines Ablassens von Abgas von innen nach außen ausgebildet sein. Weiter zusätzlich oder alternativ kann das Sicherheitsventil mit dem Bewegungsteil von der Schließstellung zur Bewegung in die Offenstellung bei Überschreitung eines vorbestimmten Grenzdrucks durch einen Druck von Abgas in bzw. innerhalb der Batteriezelle ausgebildet sein. Weiter zusätzlich oder alternativ kann die Bewegung von der Schließstellung in die Offenstellung ein Aufklappen sein.

Der Zellkontaktierer kann in der Offenstellung des Bewegungsteils mit dem Terminal keinen elektrischen Kontakt aufweisen. Anders formuliert: der Zellkontaktierer und/oder der Bewegungsteil können/kann zur Zerstörung der mindestens einen stoffschlüssigen Verbindung durch die Bewegung des Bewegungsteils von der Schließstellung in die Offenstellung ausgebildet sein.

In einer Weiterbildung der Erfindung ist die Batteriezelle für einen maximalen Energieinhalt von minimal 9 Wattstunden (Wh) und/oder von maximal 360 Wh ausgebildet bzw. konfiguriert. Dies kann ermöglichen, dass die Batteriezelle einen relativ hohen Energieinhalt aufweisen kann. Insbesondere kann die Batteriezelle für einen maximalen Energieinhalt von 5 Amperestunden mal 3,6 Volt = 18 Wh ausgebildet sein.

In einer Weiterbildung der Erfindung sind der Zellkontaktierer und das Terminal in der Schließstellung des Bewegungsteils mittels der mindestens einen stoffschlüssigen Verbindung gegen Bewegung relativ zueinander gesichert. Dies ermöglicht einen sicheren elektrischen Kontakt, insbesondere bei Vibration des Terminals und/oder des Zellkontaktierers, z.B. im Unterschied zu einem elektrischen Kontakt mittels einer kraftschlüssigen Verbindung. Insbesondere kann der Zellkontaktierer in der Schließstellung des Bewegungsteils mit dem Terminal, insbesondere direkt, eine mechanische Verbindung mittels der mindestens einen stoffschlüssigen Verbindung aufweisen. Zusätzlich oder alternativ können oder brauchen der Zellkontaktierer und das Terminal in der Offenstellung des Bewegungsteils nicht gegen Bewegung relativ zueinander gesichert sein.

In einer Weiterbildung der Erfindung weist der Zellkontaktierer die mindestens eine stoffschlüssige Verbindung mit dem Terminal in einem von dem Bewegungsteil verschiedenen Nichtbewegungsteil der Oberfläche des Terminals auf. Dies ermöglicht, dass der Zellkontaktierer die Bewegung des Bewegungsteils zulässt.

In einer Ausgestaltung der Erfindung ist der Zellkontaktierer, insbesondere vollständig, außerhalb bzw. nicht innerhalb eines Bewegungsraums des Bewegungsteils bzw. nicht in dem Bewegungsraum angeordnet. Insbesondere weist der Zellkontaktierer eine Ventilaussparung für den Bewegungsteil auf. Insbesondere kann der Zellkontaktierer derart angeordnet sein, dass der Zellkontaktierer den Bewegungsteil in Richtung nach außen nicht bedecken kann. Zusätzlich oder alternativ kann der Bewegungsraum für die Bewegung des Bewegungsteils von der Schließstellung in die Offenstellung sein.

In einer Weiterbildung der Erfindung weist der Zellkontaktierer die mindestens eine stoffschlüssige Verbindung mit dem Terminal in dem Bewegungsteil auf. Des Weiteren ist der Zellkontaktierer, insbesondere teilweise, zur Mitbewegung mit dem Bewegungsteil, insbesondere als Kontaktzunge bzw. Kontaktstreifen, ausgebildet bzw. konfiguriert. Dies ermöglicht, dass der Zellkontaktierer die Bewegung des Bewegungsteils zulässt. Insbesondere kann die Kontaktzunge die mindestens eine stoffschlüssige Verbindung mit dem Terminal in dem Bewegungsteil aufweisen.

In einer Ausgestaltung der Erfindung beaufschlägt der Zellkontaktierer den Bewegungsteil in der Schließstellung mit keiner Kraft in Richtung nach innen. Dies ermöglicht eine Erhöhung des vorbestimmten Grenzdrucks, soweit vorhanden, zu vermeiden, z.B. im Unterschied zu einem elektrischen Kontakt mittels einer kraftschlüssigen Verbindung. Insbesondere kann oder braucht der Zellkontaktierer den Bewegungsteil in der Schließstellung mit keiner Kraft in Richtung nach außen beaufschlagen. In anderen Worten: der Zellkontaktierer kann auf dem Bewegungsteil liegen.

Die mindestens eine stoffschlüssige Verbindung kann eine Lötverbindung sein.

In einer Weiterbildung der Erfindung ist die mindestens eine stoffschlüssige Verbindung eine Schweißverbindung.

In einer Weiterbildung der Erfindung weist das Terminal zwischen dem Bewegungsteil und einem, insbesondere dem, von dem Bewegungsteil verschiedenen Nichtbewegungsteil der Oberfläche des Terminals eine Sollbruchstelle auf. Dies, insbesondere ein Brechen bzw. Versagen der Sollbruchstelle, ermöglicht die Bewegung des Bewegungsteils von der Schließstellung in die Offenstellung und/oder ein Vorbestimmen des Grenzdrucks, soweit vorhanden. Insbesondere kann die Sollbruchstelle eine Kerbe, eine Einritzung oder ein Prägung, insbesondere in dem Terminal, aufweisen oder sein.

In einer Weiterbildung der Erfindung ist das Terminal ein Minusterminal bzw. negatives Terminal.

Insbesondere kann die Batteriezelle eine prismatische Zelle sein.

In einer Weiterbildung der Erfindung ist die Batteriezelle eine, insbesondere längliche, Rundzelle. Das Terminal ist an einer Stirnseite der Rundzelle angeordnet. Der Bewegungsteil ist zur Bewegung entlang einer Längsachse der Rundzelle ausgebildet bzw. konfiguriert. Insbesondere kann eine Länge der Rundzelle größer als ein Durchmesser der Rundzelle sein. Zusätzlich oder alternativ kann die Rundzelle an einer gegenüberliegenden Stirnseite ein weiteres, insbesondere das weitere, Terminal aufweisen.

In einer Weiterbildung der Erfindung ist das Terminal an einer Seite, insbesondere der Stirnseite, der Batteriezelle angeordnet. Die Batteriezelle weist an einer gegenüberliegenden Seite, insbesondere Stirnseite, ein weiteres, insbesondere das weitere, Terminal mit einem, insbesondere dem, weiteren Sicherheitsventil auf. Dies kann ermöglichen, einen Schaden klein zu halten, insbesondere auch wenn die Batteriezelle einen besonders hohen Energieinhalt aufweisen kann.

In einer Weiterbildung der Erfindung weist die Batterievorrichtung mindestens eine weitere Batteriezelle auf. Die Batteriezelle und die weitere Batteriezelle sind mittels des Zellkontaktierers elektrisch zusammengeschaltet. Insbesondere kann die Batterievorrichtung als Batteriepack bezeichnet werden. Zusätzlich oder alternativ können die Batteriezelle und die weitere Batteriezelle gleich, insbesondere typ- und/oder baugleich, sein. Weiter zusätzlich oder alternativ können die Batteriezelle und die weitere Batteriezelle mittels des Zellkontaktierers seriell oder parallel geschaltet sein.

Das erfindungsgemäße Bearbeitungssystem weist eine, insbesondere die, Batterievorrichtung wie zuvor beschrieben und ein, insbesondere das, elektrisch angetriebenes Bearbeitungsgerät auf. Die Batterievorrichtung und das Bearbeitungsgerät sind zur elektrischen Verbindung miteinander zur, insbesondere automatischen, Versorgung des Bearbeitungsgeräts mit elektrischer Antriebsleistung von der Batterievorrichtung ausgebildet bzw. konfiguriert.

Insbesondere kann das Bearbeitungssystem ein Garten-, Forst- und/oder Baubearbeitungssystem sein. Zusätzlich oder alternativ kann das Bearbeitungsgerät ein Garten-, Forst- und/oder Baubearbeitungsgerät sein. Weiter zusätzlich oder alternativ kann das Bearbeitungsgerät ein handgeführtes, insbesondere bodengeführtes oder handgetragenes, Bearbeitungsgerät sein. Insbesondere handgeführtes, insbesondere handgetragenes, Bearbeitungsgerät kann bedeuten, dass das Bearbeitungsgerät eine maximale Masse von 50 Kilogramm (kg), insbesondere von 20 kg, insbesondere von 10 kg, aufweisen kann. Weiter zusätzlich oder alternativ kann das Bearbeitungsgerät einen Elektroantriebsmotor aufweisen. Weiter zusätzlich oder alternativ können die Batterievorrichtung und das Bearbeitungsgerät zur, insbesondere werkzeugfrei und/oder zerstörungsfrei, lösbaren elektrischen Verbindung miteinander ausgebildet sein, insbesondere mittels Steckverbinder. Weiter zusätzlich oder alternativ können die Batterievorrichtung und das Bearbeitungsgerät zur, insbesondere lösbaren, insbesondere werkzeugfrei und/oder zerstörungsfrei lösbaren, mechanischen Verbindung miteinander ausgebildet sein. Insbesondere kann das Bearbeitungsgerät zum Tragen der Batterievorrichtung ausgebildet sein.

In einer Weiterbildung der Erfindung ist das elektrisch angetriebene Bearbeitungsgerät eine Säge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer oder eine Grasschere.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine schematische Ansicht auf eine Stirnseite einer Batteriezelle mit einem Sicherheitsventil mit einem Bewegungsteil in einer Schließstellung einer erfindungsgemäßen Batterievorrichtung,
- Fig. 2: eine schematische Ansicht auf eine Umfangsseite der Batteriezelle der Fig. 1 mit dem Bewegungsteil in der Schließstellung,
- Fig. 3: eine schematische Ansicht auf die Umfangsseite der Batteriezelle der Fig. 1 mit dem Bewegungsteil in einer Offenstellung,
- Fig. 4: eine schematische Ansicht auf eine gegenüberliegenden Stirnseite der Batteriezelle der Fig. 1 mit einem weiteren Sicherheitsventil,
- Fig. 5: eine schematische Ansicht auf ein erstes Ausführungsbeispiels eines Zellkontaktierers der erfindungsgemäßen Batterievorrichtung,
- Fig. 6: eine schematische Ansicht auf die Stirnseite der Batteriezelle der Fig. 1 mit dem Bewegungsteil in der Schließstellung und den Zellkontaktierer der Fig. 5,
- Fig. 7: eine schematische Ansicht auf die Umfangsseite der Batteriezelle der Fig. 1 mit dem Bewegungsteil in der Schließstellung, eine Umfangsseite einer weiteren Batteriezelle mit einem Bewegungsteil in der Offenstellung und den Zellkontaktierer der Fig. 5,
- Fig. 8: eine schematische Ansicht auf ein zweites Ausführungsbeispiels eines Zellkontaktierers der erfindungsgemäßen Batterievorrichtung,
- Fig. 9: eine schematische Ansicht auf die Stirnseite der Batteriezelle der Fig. 1 mit dem Bewegungsteil in der Schließstellung und den Zellkontaktierer der Fig. 8,
- Fig. 10: eine schematische Ansicht auf die Umfangsseite der Batteriezelle der Fig. 1 mit dem Bewegungsteil in der Schließstellung, eine Umfangsseite einer weiteren Batteriezelle mit einem Bewegungsteil in der Offenstellung und den Zellkontaktierer der Fig. 8, und
- Fig. 11: eine schematische Ansicht auf ein erfindungsgemäßes Bearbeitungssystem aufweisend die erfindungsgemäße Batterievorrichtung der Fig. 1 bis 10 und ein elektrisch angetriebenes Bearbeitungsgerät in Form einer Säge.

### DETAILLIERTE BESCHREIBUNG DER AUSFÜHRUNGSBEISPIELE

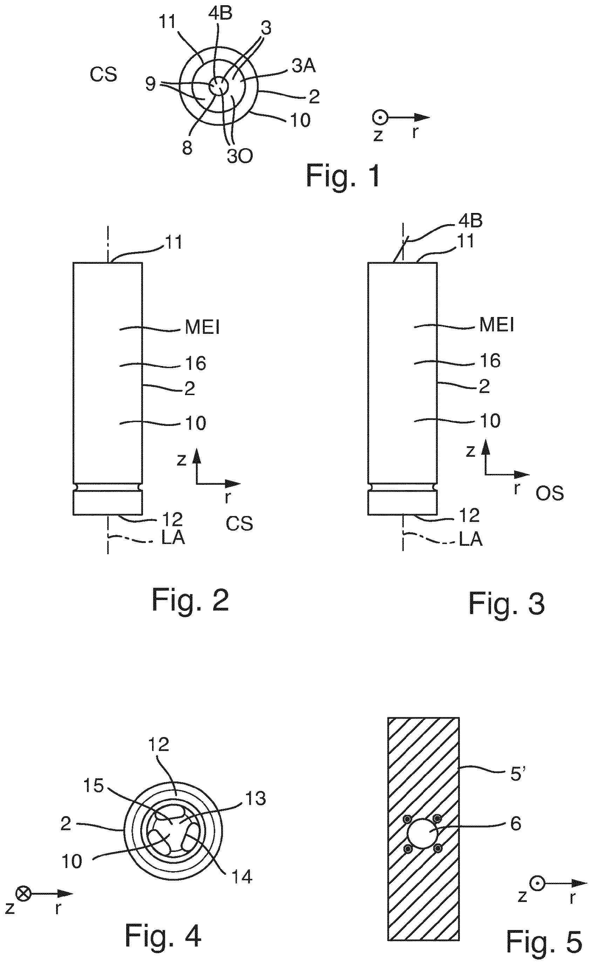

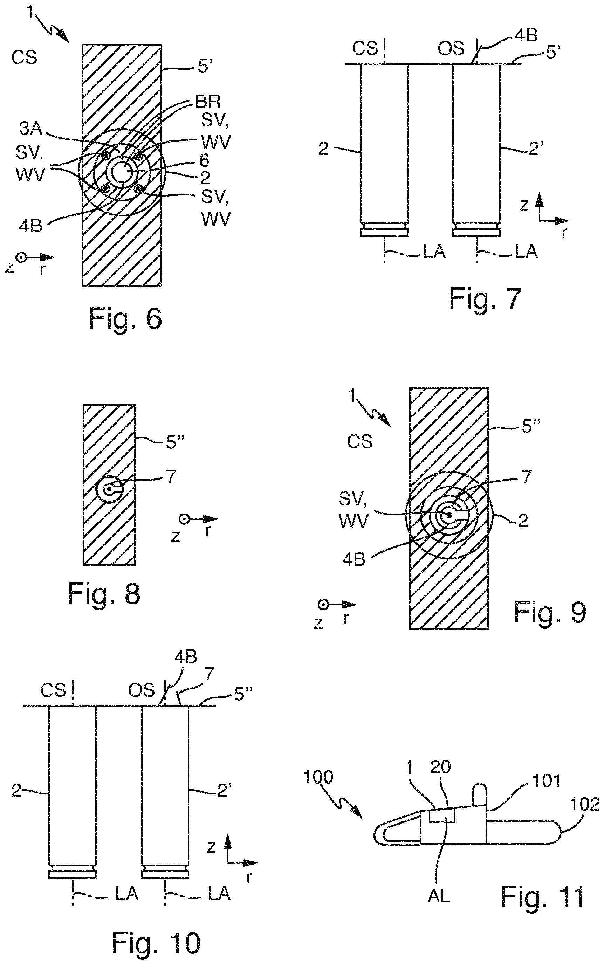

Fig. 1 bis 11 zeigen eine erfindungsgemäße Batterievorrichtung 1 zur Versorgung eines elektrisch angetriebenen Bearbeitungsgeräts 101 mit elektrischer Antriebsleistung AL. Die Batterievorrichtung 1 weist mindestens eine Batteriezelle 2 und mindestens einen Zellkontaktierer 5', 5" auf. Die Batteriezelle 2 weist ein Terminal 3 mit einem Sicherheitsventil 4 auf, wie in Fig. 1 gezeigt. Das Sicherheitsventil 4 ist mit einem Bewegungsteil 4B einer Oberfläche 3O des Terminals 3 von einer Schließstellung CS, wie in Fig. 2 gezeigt, zur Bewegung in Richtung nach außen z in eine Offenstellung OS, wie in Fig. 3 gezeigt, ausgebildet. Der Zellkontaktierer 5', 5" weist in der Schließstellung CS des Bewegungsteils 4B mit dem Terminal 3 einen elektrischen Kontakt mittels mindestens einer stoffschlüssigen Verbindung SV auf, wie in Fig. 6, 7 links, 9 und 10 links gezeigt. Des Weiteren lässt der Zellkontaktierer 5', 5" die Bewegung des Bewegungsteils 4B zu, wie in Fig. 7 rechts und 10 rechts gezeigt.

In den gezeigten Ausführungsbeispielen ist die Batteriezelle 2 eine, insbesondere längliche, Rundzelle 10. Das Terminal 3 ist an einer Stirnseite 11 der Rundzelle 10 angeordnet. Der Bewegungsteil 4B ist zur Bewegung entlang einer Längsachse LA der Rundzelle10 ausgebildet.

In den gezeigten Ausführungsbeispielen ist die Längsachse der Rundzelle 10 parallel zu der Richtung nach außen z.

Des Weiteren weist das Terminal 3 zwischen dem Bewegungsteil 4B und einem von dem Bewegungsteil 4B verschiedenen Nichtbewegungsteil 3A der Oberfläche 3O des Terminals 3 eine Sollbruchstelle 8 auf, wie in Fig. 1 gezeigt.

In den gezeigten Ausführungsbeispielen ist der, insbesondere kreisrunde, Bewegungsteil 4B von dem, insbesondere ringförmigen, Nichtbewegungsteil 3A umgeben bzw. umschlossen, insbesondere in radialer Richtung r. Insbesondere ist die radiale Richtung r orthogonal zu der Richtung nach außen z bzw. der Längsachse LA.

Außerdem ist in den gezeigten Ausführungsbeispielen die Bewegung von der Schließstellung CS in die Offenstellung OS ein Aufklappen.

Weiter ist das Terminal 3 ein Minusterminal 9.

Zudem weist die Batteriezelle 2, in den gezeigten Ausführungsbeispielen die Rundzelle 10, an einer gegenüberliegenden Seite 12, insbesondere Stirnseite, ein weiteres Terminal 13 mit einem weiteren Sicherheitsventil 14 auf, wie in Fig. 4 gezeigt.

Insbesondere ist das weitere Terminal 13 ein Plusterminal 15.

Des Weiteren weist die Batteriezelle 2, in den gezeigten Ausführungsbeispielen die Rundzelle 10, zwischen der Seite 11, insbesondere Stirnseite, und der Seite 12, insbesondere Stirnseite, eine Umfangsseite 16 auf.

Außerdem ist die Batteriezelle 2 für einen maximalen Energieinhalt MEI von 18 Wh ausgebildet. In alternativen Ausführungsbeispielen kann die Batteriezelle für einen maximalen Energieinhalt von minimal 9 Wh und/oder von maximal 360 Wh ausgebildet sein.

Im Detail ist die Batteriezelle 2 eine 21700-Zelle.

Weiter ist in den gezeigten Ausführungsbeispielen der Zellkontaktierer 5', 5" einstückig und/oder als Blech ausgebildet.

Zudem sind der Zellkontaktierer 5', 5" und das Terminal 3 in der Schließstellung CS des Bewegungsteils 5B mittels der mindestens einen stoffschlüssigen Verbindung SV gegen Bewegung relativ zueinander gesichert, insbesondere in der Richtung nach außen z und/oder der radialen Richtung r.

Des Weiteren ist die mindestens eine stoffschlüssige Verbindung SV eine Schweißverbindung WV.

In dem Ausführungsbeispiel der Fig. 5 bis 7 weist der Zellkontaktierer 5' die mindestens eine stoffschlüssige Verbindung SV mit dem Terminal 3 in dem von dem Bewegungsteil 4B verschiedenen Nichtbewegungsteil 3A der Oberfläche 3O des Terminals 3 auf.

Im Detail ist der Zellkontaktierer 5' außerhalb eines Bewegungsraums BR des Bewegungsteils 4B angeordnet, insbesondere in radialer Richtung r. Insbesondere weist der Zellkontaktierer 5' eine, insbesondere ringförmige und/oder geschlossene, Ventilaussparung 6 für den Bewegungsteil 4B auf.

In dem Ausführungsbeispiel der Fig. 5 bis 7 ist ein Durchmesser der Ventilaussparung 6 größer als ein Durchmesser des Bewegungsteils 4B in radialer Richtung r.

Außerdem bedeckt in dem Ausführungsbeispiel der Fig. 5 bis 7 der Zellkontaktierer 5' den Bewegungsteil 4B in Richtung nach außen z bzw. entlang der Längsachse LA nicht.

In dem Ausführungsbeispiel der Fig. 8 bis 10 weist der Zellkontaktierer 5" die mindestens eine stoffschlüssige Verbindung SV mit dem Terminal 3 in dem Bewegungsteil 4B auf. Weiter ist der Zellkontaktierer 5", insbesondere teilweise, zur Mitbewegung bzw. zum Mitaufklappen mit dem Bewegungsteil 4B, insbesondere als Kontaktzunge 7, ausgebildet.

Insbesondere weist die Kontaktzunge 7 die mindestens eine stoffschlüssige Verbindung SV mit dem Terminal 3 in dem Bewegungsteil 4B auf'.

Im Detail beaufschlägt der Zellkontaktierer 5" den Bewegungsteil 4B in der Schließstellung CS mit keiner Kraft in Richtung nach innen -z, und insbesondere mit keiner Kraft in Richtung nach außen z.

Zudem weist in dem Ausführungsbeispiel der Fig. 5 bis 7 der Zellkontaktierer 5' in der Schließstellung CS des Bewegungsteils 4B mit dem Terminal 3 den elektrischen Kontakt mittels vier stoffschlüssigen Verbindungen SV auf. Des Weiteren weist in dem Ausführungsbeispiel der Fig. 8 bis 10 der Zellkontaktierer 5" in der Schließstellung CS des Bewegungsteils 4B mit dem Terminal 3 den elektrischen Kontakt mittels nur einer einzigen stoffschlüssigen Verbindung SV auf. In alternativen Ausführungsbeispielen kann der Zellkontaktierer in der Schließstellung des Bewegungsteils mit dem Terminal den elektrischen Kontakt mittels nur einer einzigen, zwei, drei, vier oder mindestens fünf stoffschlüssigen Verbindungen aufweisen.

Außerdem weist in den gezeigten Ausführungsbeispielen der Zellkontaktierer 5', 5" in der Offenstellung OS des Bewegungsteils 4B mit dem Terminal 3 keinen elektrischen Kontakt auf.

Weiter weist die Batterievorrichtung 1 mindestens eine, insbesondere gleiche, weitere Batteriezelle 2' auf, wie in Fig. 7 und 10 gezeigt. Die Batteriezelle 2 und die weitere Batteriezelle 2' sind mittels des Zellkontaktierers 5', 5" elektrisch zusammengeschaltet.

Im Detail sind die Batteriezelle 2 und die weitere Batteriezelle 2' nebeneinander angeordnet, insbesondere mit den Längsachsen LA parallel zueinander.

In alternativen Ausführungsbeispielen kann die Batterievorrichtung nur eine einzige, zwei oder mindestens drei Batteriezellen aufweisen.

Zudem kann in alternativen Ausführungsbeispielen die Batterievorrichtung nur eine einzige oder mindestens zwei Zellkontaktierer aufweisen.

Des Weiteren weist die Batterievorrichtung 1 ein Vorrichtungs- bzw. Packgehäuse 20 auf, wie in Fig. 11 gezeigt. Die mindestens eine Batteriezelle 2, und insbesondere die mindestens eine weitere Batteriezelle 2', und der mindestens eine Zellkontaktierer 5', 5" sind in dem Vorrichtungsgehäuse 20 angeordnet.

Fig. 11 zeigt ein erfindungsgemäßes Bearbeitungssystem 100. Das Bearbeitungssystem weist die Batterievorrichtung 1 und ein elektrisch angetriebenes Bearbeitungsgerät 101 auf. Die Batterievorrichtung 1 und das Bearbeitungsgerät 101 sind zur elektrischen Verbindung miteinander zur Versorgung des Bearbeitungsgeräts 101 mit elektrischer Antriebsleistung AL von der Batterievorrichtung 1 ausgebildet, insbesondere elektrisch verbunden.

In Fig. 11 ist das elektrisch angetriebene Bearbeitungsgerät 101 eine Säge102. In alternativen Ausführungsbeispielen kann das Bearbeitungsgerät ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer oder eine Grasschere sein.

In Fig. 11 ist das Bearbeitungsgerät 101, insbesondere die Säge 102, zum Tragen der Batterievorrichtung 1 ausgebildet, insbesondere trägt.

Wie die gezeigten und oben erläuterten Ausführungsbeispiele deutlich machen, stellt die Erfindung eine Batterievorrichtung zur Versorgung eines elektrisch angetriebenen Bearbeitungsgeräts mit elektrischer Antriebsleistung, wobei die Batterievorrichtung, verbesserte Eigenschaften aufweist, insbesondere sicherer ist, und ein Bearbeitungssystem aufweisend eine solche Batterievorrichtung und ein elektrisch angetriebenes Bearbeitungsgerät bereit.

## Patentansprüche

1. Batterievorrichtung (1) zur Versorgung eines elektrisch angetriebenen Bearbeitungsgeräts (101) mit elektrischer Antriebsleistung (AL), wobei die Batterievorrichtung (1) aufweist:
- mindestens eine Batteriezelle (2), wobei die Batteriezelle (2) ein Terminal (3) mit einem Sicherheitsventil (4) aufweist, wobei das Sicherheitsventil (4) mit einem Bewegungsteil (4B) einer Oberfläche (3O) des Terminals (3) von einer Schließstellung (CS) zur Bewegung in Richtung nach außen (z) in eine Offenstellung (OS) ausgebildet ist, und
- mindestens einen Zellkontaktierer (5', 5"), wobei der Zellkontaktierer (5', 5") in der Schließstellung (CS) des Bewegungsteils (4B) mit dem Terminal (3) einen elektrischen Kontakt mittels mindestens einer stoffschlüssigen Verbindung (SV) aufweist und die Bewegung des Bewegungsteils (4B) zulässt.

2. Batterievorrichtung (1) nach Anspruch 1,
- wobei die Batteriezelle (2) für einen maximalen Energieinhalt (MEI) von minimal 9 Wh und/oder von maximal 360 Wh ausgebildet ist.

3. Batterievorrichtung (1) nach einem der vorhergehenden Ansprüche,
- wobei der Zellkontaktierer (5', 5") und das Terminal (3) in der Schließstellung (CS) des Bewegungsteils (4B) mittels der mindestens einen stoffschlüssigen Verbindung (SV) gegen Bewegung relativ zueinander gesichert sind.

4. Batterievorrichtung (1) nach einem der vorhergehenden Ansprüche,
- wobei der Zellkontaktierer (5') die mindestens eine stoffschlüssige Verbindung (SV) mit dem Terminal (3) in einem von dem Bewegungsteil (4B) verschiedenen Nichtbewegungsteil (3A) der Oberfläche (3O) des Terminals (3) aufweist.

5. Batterievorrichtung (1) nach Anspruch 4,
- wobei der Zellkontaktierer (5') außerhalb eines Bewegungsraums (?) des Bewegungsteils (4B) angeordnet ist, insbesondere eine Ventilaussparung (6) für den Bewegungsteil (4B) aufweist.

6. Batterievorrichtung (1) nach einem der vorhergehenden Ansprüche,
- wobei der Zellkontaktierer (5") die mindestens eine stoffschlüssige Verbindung (SV) mit dem Terminal (3) in dem Bewegungsteil (4B) aufweist und zur Mitbewegung mit dem Bewegungsteil (4B), insbesondere als Kontaktzunge (7), ausgebildet ist.

7. Batterievorrichtung (1) nach Anspruch 6,
- wobei der Zellkontaktierer (5") den Bewegungsteil (4B) in der Schließstellung (CS) mit keiner Kraft (F) in Richtung nach innen (-z) beaufschlägt.

8. Batterievorrichtung (1) nach einem der vorhergehenden Ansprüche,
- wobei die mindestens eine stoffschlüssige Verbindung (SV) eine Schweißverbindung (WV) ist.

9. Batterievorrichtung (1) nach einem der vorhergehenden Ansprüche,
- wobei das Terminal (3) zwischen dem Bewegungsteil (4B) und einem von dem Bewegungsteil (4B) verschiedenen Nichtbewegungsteil (3A) der Oberfläche (3O) des Terminals (3) eine Sollbruchstelle (8) aufweist.

10. Batterievorrichtung (1) nach einem der vorhergehenden Ansprüche,
- wobei das Terminal (3) ein Minusterminal (9) ist.

11. Batterievorrichtung (1) nach einem der vorhergehenden Ansprüche,
- wobei die Batteriezelle (2) eine, insbesondere längliche, Rundzelle (10) ist, wobei das Terminal (3) an einer Stirnseite (11) der Rundzelle (10) angeordnet ist und wobei der Bewegungsteil (4B) zur Bewegung entlang einer Längsachse (LA) der Rundzelle (10) ausgebildet ist.

12. Batterievorrichtung (1) nach einem der vorhergehenden Ansprüche,
- wobei das Terminal (3) an einer Seite (11) der Batteriezelle (2) angeordnet ist, und
- wobei die Batteriezelle (2) an einer gegenüberliegenden Seite (12) ein weiteres Terminal (13) mit einem weiteren Sicherheitsventil (14) aufweist.

13. Batterievorrichtung (1) nach einem der vorhergehenden Ansprüche,
- wobei die Batterievorrichtung (1) mindestens eine weitere Batteriezelle (2') aufweist, und
- wobei die Batteriezelle (2) und die weitere Batteriezelle (2') mittels des Zellkontaktierers (5', 5") elektrisch zusammengeschaltet sind.

14. Bearbeitungssystem (100), wobei das Bearbeitungssystem (100) aufweist:
- eine Batterievorrichtung (1) nach einem der vorhergehenden Ansprüche, und
- ein elektrisch angetriebenes Bearbeitungsgerät (101),
- wobei die Batterievorrichtung (1) und das Bearbeitungsgerät (101) zur elektrischen Verbindung miteinander zur Versorgung des Bearbeitungsgeräts (101) mit elektrischer Antriebsleistung (AL) von der Batterievorrichtung (1) ausgebildet sind.

15. Bearbeitungssystem (100) nach Anspruch 14,
- wobei das elektrisch angetriebene Bearbeitungsgerät (101) eine Säge (102), ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer oder eine Grasschere ist.
